# EUROPÄISCHE PATENTANMELDUNG

(11) **EP 3 184 564 A1**
(43) Veröffentlichungstag der Anmeldung: **28.06.2017**
(21) Anmeldenummer: 15201497.3
(22) Anmeldetag: 21.12.2015
(51) Int. Cl.: C08G 18/48, C08G 18/72, C08G 18/76, C08G 18/12, C08G 18/20, C08G 18/32, C09J 175/08

(54) **STRUKTURELLER POLYURETHANKLEBSTOFF**

(71) Anmelder: Sika Technology AG, 6340 Baar (CH)
(72) Erfinder: ITTRICH, Florian, 25421 Pinneberg (DE); DEMMIG, Martin, 25451 Quickborn (DE)
(74) Vertreter: Sika Patent Attorneys

(57) **Zusammenfassung**

Die vorliegende Erfindung betrifft einen zweikomponentigen Polyurethanklebstoff mit hoher Festigkeit und Dehnbarkeit bei gleichzeitigem schnellem Haftungsaufbau, geeignet als struktureller Klebstoff. Der Klebstoff enthält ein Triol, ein Diol, gegebenenfalls ein Polyamin, ein Polyisocyanat-Semiprepolymer und ein Isocyanatgruppen aufweisendes Polyurethanpolymer in bestimmten Verhältnissen.

## Beschreibung

### Technisches Gebiet

Die Erfindung betrifft das Gebiet der zweikomponentigen Polyurethanklebstoffe, insbesondere der strukturellen Polyurethanklebstoffe.

### Stand der Technik

Zweikomponentige Polyurethanzusammensetzungen auf der Basis von Polyolen und Polyisocyanaten werden seit langem als elastische Klebstoffe eingesetzt. Sie härten nach dem Mischen schnell aus und können deshalb bereits nach kurzer Zeit Kräfte aufnehmen und übertragen.

Strukturelle Klebstoffe, auch Konstruktionsklebstoffe oder Montageklebstoffe genannt, werden in der Fertigungsindustrie verwendet, um Bauteile so miteinander zu verkleben, dass der Klebeverbund Teil einer dauerhaft belastbaren Konstruktion ist. Solche Klebstoffe sind typischerweise zäh-elastisch und müssen hohe Ansprüche in Bezug auf Verarbeitbarkeit, Festigkeit und Anhaftungskräfte erfüllen.

Zur Verklebung von Leichtbaustrukturen sind Klebstoffe wünschenswert, welche eine ausreichende Härte, eine hohe Festigkeit und eine hohe Dehnbarkeit bei gleichzeitigem schnellen Haftungsaufbau bei Raumtemperatur zur Gewährleistung einer hohen Prozessgeschwindigkeit aufweisen.

WO2014/029891 (A1) beschreibt strukturelle Polyurethanklebstoffe, welche eine hohe Festigkeit und eine hohe Dehnbarkeit bei einer nur schwach ausgeprägten Abhängigkeit der mechanischen Eigenschaften von der Temperatur verfügen. Jedoch ist der Elastizitätsmodul für die in der vorliegenden Erfindung geforderten Anwendungen nicht ausreichend.

### Darstellung der Erfindung

Aufgabe der vorliegenden Erfindung ist es daher, einen Polyurethanklebstoff zur Verfügung zu stellen, welcher über eine ausreichende Härte, eine hohe Festigkeit und Dehnbarkeit bei gleichzeitigem schnellen Haftungsaufbau aufweisen.

Überraschenderweise wurde gefunden, dass ein Polyurethanklebstoff nach Anspruch 1 diese Aufgabe löst. Die erzielte Kombination aus Härte, Festigkeit und Dehnung des ausgehärteten Materials ist verbunden mit einem schnellen Haftungsaufbau. Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Polyurethanklebstoff bestehend aus einer ersten und einer zweiten Komponente, wobei
- die erste Komponente
   a) mindestens ein Triol **A1** mit einem Molekulargewicht im Bereich von 1'000 bis 10'000 g/mol,
   b) mindestens ein Diol **A2** mit zwei primären Hydroxylgruppen und einem Molekulargewicht im Bereich von 60 bis 150 g/mol, und
   c) vorzugsweise mindestens ein aliphatisches Polyamin **A3** mit einem Molekulargewicht im Bereich von 60 bis 200 g/mol enthält; und
- die zweite Komponente
   d) mindestens ein Polyisocyanat-Semiprepolymer **B1** umfassend ein Reaktionsprodukt aus 4,4'- und gegebenenfalls 2,4'-Diphenylmethandiisocyanat mit Polyolen mit einem Molekulargewicht kleiner als 1500 g/mol, vorzugsweise Polyole ausgewählt aus der Liste bestehend aus Polyoxyalkylen-diole, Polyoxyalkylen-triole und 1,1,1-Trimethylolpropan.
      und
   e) mindestens ein Isocyanatgruppen aufweisendes Polyurethanpolymer **B2** enthält;
   Das Triol **A1** und das Diol **A2** sind in einer solchen Menge vorhanden, dass
   f) das Verhältnis **V1** der Anzahl der NCO-reaktiven Gruppen von **A2/A1** im Bereich von 4 bis 15 liegt, vorzugsweise von 4.5 - 12, insbesondere bevorzugt von 5 - 11.5, am meisten bevorzugt von 8 - 10, und
   das Polyisocyanat-Semiprepolymer **B1** und das Isocyanatgruppen aufweisende Polyurethanpolymer **B2** sind in einer solchen Menge vorhanden, dass
   g) das Verhältnis **V2** der Anzahl freier NCO-Gruppen von **B1/B2** im Bereich von 20 bis 110 liegt, vorzugsweise von 25 - 100, insbesondere bevorzugt von 35 - 100, am meisten bevorzugt von 40 - 100.

Die Vorsilbe "Poly" in Substanzbezeichnungen wie "Polyol", "Polyisocyanat", "Polyether" oder "Polyamin" weist im vorliegenden Dokument darauf hin, dass die jeweilige Substanz formal mehr als eine der in ihrer Bezeichnung vorkommenden funktionellen Gruppe pro Molekül enthält.

Unter dem "Molekulargewicht" versteht man bei Polymeren im vorliegenden Dokument stets das Zahlenmittel des Molekulargewichts Mn, welches typischerweise mittels GPC gegen Polystyrol als Standard bestimmt wird.

Als "primäre Hydroxylgruppe" wird eine OH-Gruppe bezeichnet, welche an ein C-Atom mit zwei Wasserstoffen gebunden ist.

Der Begriff "Phasenseparierung" beschreibt in diesem Dokument den Vorgang der Entmischung von hochgeordneten ("kristallinen") Bereichen, auch "Hartsegmente" genannt, und wenig geordneten ("amorphen") Bereichen, auch "Weichsegmente" genannt, bei der Aushärtung des Polyurethanklebstoffes. Als "Offenzeit" wird in diesem Dokument die Zeit bezeichnet, innerhalb welcher die zu verklebenden Teile gefügt sein müssen, nachdem die Komponenten vermischt sind.

Der Begriff "Härte" bezeichnet im vorliegenden Dokument die Härte des ausgehärteten Klebstoffs, wobei mit Härte insbesondere das Elastizitätsmodul (E-Modul) im Dehnungsbereich bis 5 % gemeint ist.

Der Begriff "Festigkeit" bezeichnet im vorliegenden Dokument die Festigkeit des ausgehärteten Klebstoffs, wobei mit Festigkeit insbesondere die Zugscherfestigkeit gemeint ist.

Der Begriff "Haftungsaufbau" bezeichnet im vorliegenden Dokument die Zunahme der Zugscherfestigkeit des Klebstoffs während der Aushärtung in Abhängigkeit der Zeit.

Als "Raumtemperatur" wird im vorliegenden Dokument eine Temperatur von 23 °C bezeichnet.

Der Begriff "lagerstabil" bezeichnet die Eigenschaft einer Zusammensetzung, dass sie in einem geeigneten Gebinde während mehreren Wochen bis einige Monate bei Raumtemperatur aufbewahrt werden kann, ohne dass sie sich in ihren Anwendungs- oder Gebrauchseigenschaften durch die Lagerung wesentlich verändert.

Als Triol **A1** geeignet sind insbesondere Polyoxyalkylentriole, auch Polyethertriole genannt. Dies sind Polymerisationsprodukte von Ethylenoxid, 1,2-Propylenoxid, 1,2- oder 2,3-Butylenoxid oder Mischungen davon. Typischerweise sind sie polymerisiert mit Hilfe eines Startermoleküls mit drei aktiven Wasserstoffatomen wie beispielsweise Glycerin, 1,1,1-Trimethylolethan, 1,1,1-Trimethylolpropan oder Mischungen davon.

Bevorzugt als Triol **A1** sind Polyoxypropylentriole, Polyoxyethylentriole und Polyoxypropylen-Polyoxyethylen-Triole.

Besonders bevorzugt weist das Triol **A1** primäre Hydroxylgruppen auf. Dadurch ist der Polyurethanklebstoff weniger anfällig auf unerwünschte Reaktionen von Isocyanatgruppen mit gegebenenfalls vorhandenem Wasser, wodurch Blasen und eine unvollständige Aushärtung entstehen können.

Besonders bevorzugt als Triol **A1** sind sogenannte "EO-endcapped" (ethylene oxide-endcapped) Polyoxypropylentriole. Letztere sind spezielle Polyoxypropylenpolyoxyethylentriole, die beispielsweise dadurch erhalten werden, dass reine Polyoxypropylentriole nach Abschluss der Polypropoxylierung mit Ethylenoxid weiter alkoxyliert werden und dadurch primäre Hydroxylgruppen aufweisen.

Das Triol **A1** weist bevorzugt eine mittlere OH-Funktionalität im Bereich von 2.2 bis 3 auf. Mit solchen Triolen **A1** werden Klebstoffe mit guten mechanischen Eigenschaften erhalten.

Das Triol **A1** weist bevorzugt ein Molekulargewicht im Bereich von 3'000 bis 8'000 g/mol, besonders bevorzugt von 4'000 bis 6'000 g/mol, auf. Ein solches Triol ist einem Klebstoff mit guten mechanischen Eigenschaften besonders zuträglich.

Das Triol **A1** wird bevorzugt in einer Menge von 30 bis 70 Gewichts-%, besonders bevorzugt 45 bis 55 Gewichts-%, insbesondere 45 bis 50 Gewichts%, bezogen auf das Gesamtgewicht der ersten Komponente, eingesetzt.

Als Diol **A2** geeignet sind insbesondere 1,2-Ethandiol, 1,3-Propandiol, 1,4-Butandiol, 1,5-Pentandiol, 1,6-Hexandiol, 1,3-Cyclohexandimethanol, 1,4-Cyclohexandimethanol und Diethylenglykol. Diese Diole weisen primäre, sterisch kaum gehinderte Hydroxylgruppen auf, welche mit Isocyanatgruppen besonders reaktiv sind.

Bevorzugt handelt es sich beim Diol **A2** um ein lineares Diol, insbesondere ausgewählt aus der Gruppe bestehend aus 1,3-Propandiol, 1,4-Butandiol und 1,5-Pentandiol. Diese Diole sind besonders gut handhabbar, da sie kaum hydrophil und bei Raumtemperatur flüssig sind und bei der Aushärtung des Klebstoffes eine hohe Festigkeit bei guter Dehnbarkeit über einen weiten Temperaturbereich begünstigen. Davon am meisten bevorzugt ist 1,4-Butandiol.

Das Diol **A2** wird bevorzugt in einer Menge von 5 bis 15 Gewichts-%, bevorzugt 7.5 bis 15 Gewichts-%, insbesondere 10 bis 15 Gewichts-%, bezogen auf das Gesamtgewicht der ersten Komponente, eingesetzt.

Als aliphatisches Polyamin **A3** geeignet sind Amine mit zwei oder drei aliphatischen Aminogruppen, insbesondere handelsübliche aliphatische, cycloaliphatische oder arylaliphatische primäre Diamine wie insbesondere Ethylendiamin, 1,2-Propandiamin, 1,3-Propandiamin, 2-Methyl-1,2-propandiamin, 2,2-Dimethyl-1,3-propandiamin, 1,3-Butandiamin, 1,4-Butandiamin, 1,3-Pentandiamin (DAMP), 1,5-Pentandiamin, 1,5-Diamino-2-methylpentan (MPMD), 2-Butyl-2-ethyl-1,5-pentandiamin (C11-Neodiamin), 1,6-Hexandiamin, 2,5-Dimethyl-1,6-hexandiamin, 2,2,4- und 2,4,4-Trimethylhexamethylendiamin (TMD), 1,7-Heptandiamin, 1,8-Octandiamin, 1,9-Nonandiamin, 1,10-Decandiamin, 1,11-Undecandiamin, 1,12-Dodecandiamin, 1,2-, 1,3- und 1,4-Diaminocyclohexan, 1,4-Diamino-2,2,6-trimethylcyclohexan (TMCDA), 1-Amino-3-aminomethyl-3,5,5-trimethylcyclohexan (= Isophorondiamin oder IPDA), 2- und 4-Methyl-1,3-diaminocyclohexan und Mischungen davon, 1,3- und 1,4-Bis-(aminomethyl)cyclohexan, 2,5(2,6)-Bis-(aminomethyl)-bicyclo[2.2.1]heptan (NBDA), 3(4),8(9)-Bis-(aminomethyl)-tricyclo[5.2.1.0^{2,6}]decan, 1,8-Menthandiamin, Bis-(2-aminoethyl)ether, 3,6-Dioxaoctan-1,8-diamin, 4,7-Dioxadecan-1,10-diamin, 4,7-Dioxadecan-2,9-diamin, 1,3- Bis-(aminomethyl)benzol und 1,4-Bis-(aminomethyl)benzol.

Besonders bevorzugt ist das Polyamin **A3** ausgewählt aus der Gruppe bestehend aus 1,5-Diamino-2-methylpentan, 2,2,4- und 2,4,4-Trimethylhexamethylendiamin, 1,8-Octandiamin, 1,10-Decandiamin, 1-Amino-3-aminomethyl-3,5,5-trimethylcyclohexan, 2- und 4-Methyl-1,3-diaminocyclohexan und Mischungen davon, 1,3-Bis-(aminomethyl)cyclohexan, 1,4-Bis-(aminomethyl)cyclohexan, 2,5(2,6)-Bis-(aminomethyl)-bicyclo[2.2.1]heptan, 3(4),8(9)-Bis-(aminomethyl)-tricyclo[5.2.1.0^{2,6}]decan, Bis-(2-aminoethyl)ether, 3,6-Dioxaoctan-1,8-diamin, 4,7-Dioxadecan-1,10-diamin, 4,7-Dioxadecan-2,9-diamin, 1,3- Bis-(aminomethyl)benzol und 1,4-Bis-(aminomethyl)benzol.

Davon bevorzugt sind 1,3-Bis-(aminomethyl)cyclohexan und 1,3-Bis-(aminomethyl)benzol, am meisten bevorzugt ist 1,3-Bis-(aminomethyl)benzol. Mit diesen Polyaminen entstehen ausgehärtete Klebstoffe mit ganz besonders hohen Festigkeiten.

Das aliphatische Polyamin **A3** wird bevorzugt in einer Menge von 0.5 bis 2 Gewichts-%, bevorzugt 1 bis 1.5 Gewichts-%, bezogen auf das Gesamtgewicht der ersten Komponente, eingesetzt.

Das Verhältnis **V1** der Anzahl der NCO-reaktiven Gruppen von **A2** zu der Anzahl der NCO-reaktiven Gruppen von **A1** liegt im Bereich von 4 bis 15, vorzugsweise von 4.5 - 12, insbesondere bevorzugt von 5 - 11.5, am meisten bevorzugt von 8 - 10.

Hohe Werte des Verhältnisses **V1** sind einem hohen E-modul, einer hohen Zugfestigkeit, sowie hohen Werten in der Zugscherfestigkeit nach 7h, resp. 7d zuträglich. Hohe Werte des Verhältnisses **V1** führen weiter zu geringeren Werten bei der Bruchdehnung.

Das Verhältnis **V2** der Anzahl freier NCO-Gruppen von **B1** zur Anzahl freier NCO-Gruppen von **B2** liegt im Bereich von 20 bis 110, vorzugsweise von 25 - 100, insbesondere bevorzugt von 35 - 100, am meisten bevorzugt von 40 - 100.

Hohe Werte des Verhältnisses **V2** sind einem hohen E-modul, einer hohen Zugfestigkeit, sowie hohen Werten in der Zugscherfestigkeit nach 7h zuträglich. Hohe Werte des Verhältnisses **V2** führen weiter zu geringeren Werten bei der Bruchdehnung.

Vorzugsweise beträgt das Verhältnis **V3** des Anteils in Gew.-% von **B1** zu dem Anteil in Gew.-% von **B2** von 1.5 bis 10, vorzugsweise von 2 - 9.5, insbesondere bevorzugt von 2.3 - 9, besonders bevorzugt von 3.2 - 8.5, am meisten bevorzugt von 3.7 - 8.4, bezogen auf das Gesamtgewicht der zweiten Komponente.

Hohe Werte des Verhältnisses **V3** sind einem hohen E-modul, einer hohen Zugfestigkeit, sowie hohen Werten in der Zugscherfestigkeit nach 7h zuträglich. Hohe Werte des Verhältnisses **V3** führen weiter zu geringeren Werten bei der Bruchdehnung.

Vorzugsweise liegt das Verhältnis **V4** der Anzahl der NCO-reaktiven Gruppen von **A2** zu der Anzahl der NCO-reaktiven Gruppen von **A3 (A2/A3)** im Bereich von 5 bis 25, vorzugsweise von 8 - 20, insbesondere bevorzugt von 10 - 20, am meisten bevorzugt von 12 - 17.

Vorzugsweise liegt das Verhältnis **V5** der Anzahl der NCO-reaktiven Gruppen von **A1** zu der Anzahl der NCO-reaktiven Gruppen von **A3 (A1/A3)** im Bereich von 1 bis 2.5, vorzugsweise von 1.4 - 2, insbesondere bevorzugt von 1.5 - 1.8.

Vorzugsweise liegt das Verhältnis **V6** der Summe aus der Anzahl der NCO-reaktiven Gruppen von **A2 und A3** zu der Anzahl der NCO-reaktiven Gruppen von **A1 ((A2+A3)/A1)** im Bereich von 4 bis 15, vorzugsweise von 5 - 12.5, insbesondere bevorzugt von 8 - 11, am meisten bevorzugt von 9 bis 10.5.

Das Polyisocyanat-Semiprepolymer **B1** umfasst ein Reaktionsprodukt aus 4,4'-und gegebenenfalls 2,4'-Diphenylmethandiisocyanat mit Polyolen mit einem Molekulargewicht kleiner als 1500 g/mol. Vorzugsweise beträgt der Anteil des Reaktionsprodukts 5- 35 Gewichts-%, bezogen auf das Gesamtgewicht des Polyisocyanat-Semiprepolymer **B1.**

Vorzugsweise handelt es sich bei den Polyolen mit einem Molekulargewicht kleiner als 1500 g/mol um Diole oder Triole.

Vorzugsweise handelt es sich bei den Polyolen mit einem Molekulargewicht kleiner als 1500 g/mol um Polyole ausgewählt aus der Liste bestehend aus Polyoxyalkylen-diole, Polyoxyalkylen-triole und 1,1,1-Trimethylolpropan. Insbesondere bevorzugt handelt es sich bei den Polyolen mit einem Molekulargewicht kleiner als 1500 g/mol um Polyole ausgewählt aus der Liste bestehend aus Dipropylenglycol, Tripropylenglycol und 1,1,1-Trimethylolpropan.

Vorzugsweise weist das Polyisocyanat-Semiprepolymer **B1** zusätzlich monomeres 4,4'-Diphenylmethandiisocyanat auf, insbesondere in einer Menge von 40-70 Gewichts-%, besonders bevorzugt von 50-60 Gewichts-%, bezogen auf das Gesamtgewicht des Polyisocyanat-Semiprepolymer **B1.**

Vorzugsweise weist das Polyisocyanat-Semiprepolymer **B1** zusätzlich monomeres 2,4'-Diphenylmethandiisocyanat auf, insbesondere in einer Menge von 5-10 Gewichts-%, bezogen auf das Gesamtgewicht des Polyisocyanat-Semiprepolymer **B1.**

Vorzugsweise weist das Polyisocyanat-Semiprepolymer **B1** zusätzlich polymeres MDI (PMDI) der Formel (I), 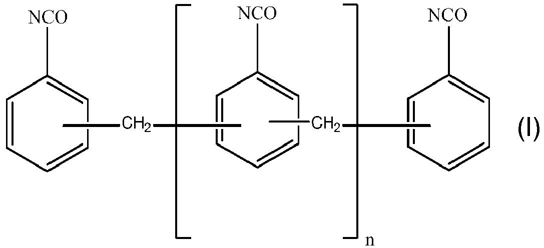 auf, wobei n für einen Wert ≤ 8, vorzugsweise n ≤ 6, steht. Das polymere MDI ist vorzugsweise hergestellt durch Phosgenierung von 4,4'-Diphenylmethandiamin. Der Anteil von polymerem MDI der Formel (I) beträgt vorzugsweise 5-30 Gewichts-%, insbesondere 15-30 Gewichts-%, bezogen auf das Gesamtgewicht des Polyisocyanat-Semiprepolymer **B1.**

Vorzugsweise weist das Polyisocyanat-Semiprepolymer **B1** zusätzlich 4,4'-Diphenylmethandiisocyanat-Carbodiimide auf, insbesondere in einer Menge von 5-30 Gewichts-%, bezogen auf das Gesamtgewicht des Polyisocyanat-Semiprepolymer **B1.**

Vorzugsweise weist das Polyisocyanat-Semiprepolymer **B1** einen Gehalt an freien Isocyanatgruppen von 15 bis 28 Gewichts-%, besonders bevorzugt von 20 bis 27 Gewichts-%, am meisten bevorzugt von 22 bis 26 Gewichts-%, auf.

Vorzugsweise weist das Polyisocyanat-Semiprepolymer **B1** eine mittlere NCO-Funktionalität von 2,0-2,7, besonders bevorzugt von 2,0-2,5, am meisten bevorzugt von 2,0-2,3, auf.

Bei dem Polyisocyanat-Semiprepolymer **B1** handelt es sich vorzugsweise um eine Zusammensetzung umfassend:
40-70 Gewichts-% 4,4'-Diphenylmethandiisocyanat
0- 30 Gewichts-% 4,4'-Diphenylmethandiisocyanat-Carbodiimide,
5- 35 Gewichts-% Reaktionsprodukt aus 4,4'- und 2,4'-Diphenylmethandiisocyanat, insbesondere 4,4'-Diphenylmethandiisocyanat, mit einer Mischung aus Polyolen mit einem Molekulargewicht kleiner als 1500 g/mol ausgewählt aus der Liste bestehend aus Polyoxyalkylen-diole,
Polyoxyalkylen-triole und 1,1,1-Trimethylolpropan,
bezogen auf das Gesamtgewicht des Polyisocyanat-Semiprepolymer **B1.**

Weiter kann es vorteilhaft sein, wenn es sich bei dem Polyisocyanat-Semiprepolymer **B1** um eine Zusammensetzung handelt, umfassend:
40-60 Gewichts-% 4,4'-Diphenylmethandiisocyanat,
5- 10 Gewichts-% 2,4'-Diphenylmethandiisocyanat,
15-30 Gewichts-% Reaktionsprodukt aus 4,4'- und 2,4'-Diphenylmethandiisocyanat mit einer Mischung aus Dipropylenglycol und Tripropylenglycol,
15-30 Gewichts-% polymeres MDI (PMDI) der Formel (I),
bezogen auf das Gesamtgewicht des Polyisocyanat-Semiprepolymer **B1.** Vorzugsweise besteht das Polyisocyanat-Semiprepolymer **B1** zu mehr als 80 Gewichts-%, insbesondere zu mehr als 90 Gewichts-%, besonders bevorzugt zu mehr als 95 Gewichts-%, bezogen auf das Gesamtgewicht des Polyisocyanat-Semiprepolymer **B1,** aus der vorgehend genannten Zusammensetzung.

Es kann weiter vorteilhaft sein, wenn es sich bei dem Polyisocyanat-Semiprepolymer **B1** um eine Zusammensetzung handelt, umfassend:
50-70 Gewichts-% 4,4'-Diphenylmethandiisocyanat
5- 30 Gewichts-% 4,4'-Diphenylmethandiisocyanat-Carbodiimide,
5- 30 Gewichts-% Reaktionsprodukt aus 4,4'-Diphenylmethandiisocyanat mit einer Mischung aus Polyolen mit einem Molekulargewicht kleiner als 1500 g/mol ausgewählt aus der Liste bestehend aus Polyoxyalkylen-diole, Polyoxyalkylen-triole und 1,1,1-Trimethylolpropan,
bezogen auf das Gesamtgewicht des Polyisocyanat-Semiprepolymer **B1.**

Weiter kann es sich vorzugsweise bei dem Polyisocyanat-Semiprepolymer **B1** um eine Zusammensetzung handeln, welche:
50-75 Gewichts-% einer Mischung aus 4,4'-Diphenylmethandiisocyanat und 4,4'-Diphenylmethandiisocyanat-Carbodiimide umfasst.

Geeignete Polyisocyanat-Semiprepolymere **B1** sind beispielsweise kommerziell erhältlich unter dem Handelsnamen Desmodur^{®} VH 20 N von Bayer oder Voramer^{®} ME 3515 von DOW.

Das Polyurethanpolymer **B2** weist bevorzugt 50 - 95 Massenprozente, insbesondere 70 - 90 Massenprozente, Polyoxyalkyleneinheiten, besonders bevorzugt Polyoxyethylen- und/oder Polyoxypropyleneinheiten, insbesondere Polyoxypropyleneinheiten, auf. Ein solches Polyurethanpolymer weist eine tiefe Viskosität auf und ermöglicht gute Dehnbarkeiten.

Das Polyurethanpolymer **B2** weist bevorzugt ein mittleres Molekulargewicht von 1'000 bis 20'000 g/mol, besonders bevorzugt von 2'000 bis 10'000 g/mol, auf.

Das Polyurethanpolymer **B2** weist bevorzugt eine mittlere NCO-Funktionalität im Bereich von 1.6 bis 2.5, insbesondere von 2.2 bis 2.3, auf. Es wurde überraschenderweise gefunden, dass solche Polyurethanpolymere, zum Beispiel gegenüber Polyurethanpolymeren mit einer geringeren NCO-Funktionalität, einen schnelleren Haftungsaufbau (Zugscherfestigkeit gemessen nach 7h RT) zeigen.

Das Polyurethanpolymer **B2** weist bevorzugt einen Gehalt an freien Isocyanatgruppen von 1 bis 5 Gewichts-%, besonders bevorzugt von 2.0 bis 3.0 Gewichts-%, am meisten bevorzugt von 2.1 bis 2.5 Gewichts-%, auf.

Auch hier wurde überraschenderweise gefunden, dass solche Polyurethanpolymere, zum Beispiel gegenüber Polyurethanpolymeren mit einer geringeren Gehalt an freien Isocyanatgruppen, einen schnelleren Haftungsaufbau (Zugscherfestigkeit gemessen nach 7h RT) zeigen.

Die Urethangruppen und die freien Isocyanatgruppen des Polyurethanpolymers **B2** sind bevorzugt abgeleitet von 4,4'-Diphenylmethandiisocyanat.Damit werden bei der Aushärtung des Klebstoffes besonders gute Hartsegmente und somit besonders hohe Festigkeiten erhalten.

Ein geeignetes Isocyanatgruppen aufweisendes Polyurethanpolymer **B2** ist erhältlich aus der Umsetzung von mindestens einem Polyisocyanat mit mindestens einem Polyol. Diese Umsetzung kann dadurch erfolgen, dass das Polyol und das Polyisocyanat mit üblichen Verfahren, beispielsweise bei Temperaturen von 50 °C bis 100 °C, gegebenenfalls unter Mitverwendung geeigneter Katalysatoren, zur Reaktion gebracht werden, wobei das Polyisocyanat so dosiert ist, dass dessen Isocyanatgruppen im Verhältnis zu den Hydroxylgruppen des Polyols im stöchiometrischen Überschuss vorhanden sind. Vorteilhaft ist das Polyisocyanat so dosiert, dass ein NCO/OH-Verhältnis von 1.3 bis 5, insbesondere eines von 1.5 bis 3, eingehalten wird. Unter dem "NCO / OH-Verhältnis" wird das Verhältnis der Anzahl der eingesetzten Isocyanatgruppen zu der Anzahl der eingesetzten Hydroxylgruppen verstanden.

Als Polyol zur Herstellung eines Polyurethanpolymers **B2** sind insbesondere die folgenden handelsüblichen Polyole oder Mischungen davon geeignet:
- Polyoxyalkylenpolyole, auch Polyetherpolyole oder Oligoetherole genannt, welche Polymerisationsprodukte von Ethylenoxid, 1,2-Propylenoxid, 1,2-oder 2,3-Butylenoxid, Oxetan, Tetrahydrofuran oder Mischungen davon sind, eventuell polymerisiert mit Hilfe eines Startermoleküls mit zwei oder mehreren aktiven Wasserstoffatomen wie beispielsweise Wasser, Ammoniak oder Verbindungen mit mehreren OH- oder NH-Gruppen wie beispielsweise 1,2-Ethandiol, 1,2- und 1,3-Propandiol, Neopentylglykol, Diethylenglykol, Triethylenglykol, die isomeren Dipropylenglykole und Tripropylenglykole, die isomeren Butandiole, Pentandiole, Hexandiole, Heptandiole, Octandiole, Nonandiole, Decandiole, Undecandiole, 1,3- und 1,4-Cyclohexandimethanol, Bisphenol A, hydriertes Bisphenol A, 1,1,1-Trimethylolethan, 1,1,1-Trimethylolpropan, Glycerin, Anilin, sowie Mischungen der vorgenannten Verbindungen. Eingesetzt werden können sowohl Polyoxyalkylenpolyole, die einen niedrigen Ungesättigtheitsgrad aufweisen (gemessen nach ASTM D-2849-69 und angegeben in Milliequivalent Ungesättigtheit pro Gramm Polyol (mEq/g)), hergestellt beispielsweise mit Hilfe von sogenannten Double Metal Cyanide Complex-Katalysatoren (DMC-Katalysatoren), als auch Polyoxyalkylenpolyole mit einem höheren Ungesättigtheitsgrad, hergestellt beispielsweise mit Hilfe von anionischen Katalysatoren wie NaOH, KOH, CsOH oder Alkalialkoholaten.

Besonders geeignet sind Polyoxyalkylendiole oder Polyoxyalkylentriole, insbesondere Polyoxyethylen- und Polyoxypropylendi- und -triole.

Ganz besonders geeignet sind Polyoxyalkylendiole und -triole mit einem Ungesättigtheitsgrad tiefer als 0.02 mEq/g und mit einem Molekulargewicht im Bereich von 1'000 - 30'000 g/mol, sowie Polyoxypropylendiole und -triole mit einem Molekulargewicht von 400 - 8'000 g/mol.

Speziell geeignet sind sogenannte Ethylenoxid-terminierte ("EO-endcapped", ethylene oxide-endcapped) Polyoxypropylenpolyole.
- Styrol-Acrylnitril- oder Acrylnitril-Methylmethacrylat-gepfropfte Polyetherpolyole.
- Polyesterpolyole, auch Oligoesterole genannt, hergestellt nach bekannten Verfahren, insbesondere der Polykondensation von Hydroxycarbonsäuren oder der Polykondensation von aliphatischen und/oder aromatischen Polycarbonsäuren mit zwei- oder mehrwertigen Alkoholen.

Besonders geeignete Polyesterpolyole sind Polyesterdiole.
- Polycarbonatpolyole, wie sie durch Umsetzung beispielsweise der oben genannten - zum Aufbau der Polyesterpolyole eingesetzten - Alkohole mit Dialkylcarbonaten, Diarylcarbonaten oder Phosgen zugänglich sind.
- Mindestens zwei Hydroxylgruppen tragende Blockcopolymere, welche mindestens zwei verschiedene Blöcke mit Polyether-, Polyester- und/oder Polycarbonatstruktur der oben beschriebenen Art aufweisen, insbesondere Polyetherpolyesterpolyole.
- Polyacrylat- und Polymethacrylatpolyole.
- Polyhydroxyfunktionelle Fette und Öle
- Polykohlenwasserstoffpolyole, auch Oligohydrocarbonole genannt.

Als Polyol zur Herstellung eines Polyurethanpolymers **B2** bevorzugt sind Polyoxyalkylenpolyole, Polyesterpolyole, Polycarbonatpolyole und Polyacrylatpolyole. Besonders bevorzugt sind Polyoxyalkylenpolyole, insbesondere Polyoxypropylenpolyole und Polyoxyethylen-Polyoxypropylen-Mischpolyole.

Das Polyol zur Herstellung eines Polyurethanpolymers **B2** weist bevorzugt ein Molekulargewicht von 500 - 20'000 g/mol, insbesondere von 1'000 bis 8'000 g/mol, auf.

Das Polyol zur Herstellung eines Polyurethanpolymers **B2** ist bevorzugt ein Diol oder eine Mischung aus mindestens einem Diol und mindestens einem Triol, insbesondere eine Mischung aus mindestens einem Diol und mindestens einem Triol.

Als Polyisocyanat zur Herstellung eines Polyurethanpolymers **B2** sind insbesondere die folgenden handelsüblichen Polyisocyanate oder Mischungen davon geeignet:
2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-di-isocyanatodiphenyl (TODI), 1,3,5-Tris-(isocyanatomethyl)benzol, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)cyclohexan, m- und p-Xylylendiisocyanat (m- und p-XDI) und m- und p-Tetramethyl-1,3- und -1,4-xylylendiisocyanat (m- und p-TMXDI). Bevorzugt sind MDI, TDI, IPDI und HDI. Besonders bevorzugt ist MDI. Am meisten bevorzugt ist 4,4'-Diphenylmethandiisocyanat. Mit diesem MDI-Isomeren werden bei der Aushärtung mit den Diolen **A2** und gegebenenfalls Polyaminen **A3** besonders gute Hartsegmente und somit besonders hohe Festigkeiten erhalten.

Besonders bevorzugt handelt es sich beim zur Herstellung des Polyurethanpolymers **B2** verwendeten Polyisocyanat um 4,4'-Diphenylmethandiisocyanat, welches bei Raumtemperatur typischerweise fest ist. Eine definierte Mischung aus Polyisocyanat-Semiprepolymer **B1** und Polyurethanpolymer **B2** lässt sich dadurch erreichen, dass das Polyurethanpolymer **B2** vorgängig separat hergestellt wird, bevor es mit dem Polyisocyanat-Semiprepolymer **B1** vermischt wird.

Bevorzugt erfolgt die Herstellung das Polyurethanpolymers **B2** somit nicht in Anwesenheit des Polyisocyanat-Semiprepolymers **B1.**

Der Polyurethanklebstoff kann als Bestandteil der ersten Komponente zusätzlich weitere mit Isocyanatgruppen reaktionsfähige Substanzen enthalten. Insbesondere kann die erste Komponente mindestens ein Polyol und/oder mindestens einen niedrigmolekularen zwei- oder mehrwertigen Alkohol enthalten, welche zur Herstellung des Polyurethanpolymers **B2** genannt wurden. Weiterhin kann der Polyurethanklebstoff Katalysatoren enthalten, die die Reaktion von Hydroxylgruppen mit Isocyanatgruppen beschleunigen, insbesondere Zinn-, Zink- und Wismut-organische Metallkatalysatoren, zum Beispiel Dibutylzinndilaurat, oder tertiäre Amine, Amidine oder Guanidine, zum Beispiel 1,4-Diazabicyclo[2.2.2]octan (DABCO) oder 1,8-Diazabicyclo[5.4.0]-undec-7-en (DBU).

Der Polyurethanklebstoff kann neben den genannten weitere in zweikomponentigen Polyurethanzusammensetzungen üblicherweise eingesetzte Bestandteile enthalten, insbesondere die Folgenden:
- Weichmacher;
- Lösemittel;
- anorganische und organische Füllstoffe;
- Fasern, beispielsweise aus Polyethylen;
- Pigmente;
- Rheologie-Modifizierer, insbesondere Verdickungsmittel oder Thixotropiermittel;
- Trocknungsmittel;
- Haftvermittler;
- Stabilisatoren gegen Oxidation, Wärme, Licht- und UV-Strahlung;
- flammhemmende Substanzen;
- oberflächenaktive Substanzen, insbesondere Netzmittel, Verlaufsmittel, Entlüftungsmittel oder Entschäumer;
- Biozide wie beispielsweise Algizide, Fungizide oder das Pilzwachstum hemmende Substanzen.

Es ist vorteilhaft, beim Einsatz von weiteren Bestandteilen des Polyurethanklebstoffs darauf zu achten, dass diese die Lagerstabilität der jeweiligen Komponente nicht stark beeinträchtigen. Falls solche Substanzen zusammen mit Isocyanaten gelagert werden sollen, bedeutet dies insbesondere, dass sie kein oder höchstens Spuren von Wasser enthalten sollten. Es kann sinnvoll sein, gewisse Bestandteile vor dem Einmischen chemisch oder physikalisch zu trocknen.

Die Komponenten des Polyurethanklebstoffs werden vorteilhaft derart formuliert, dass das Mischungsverhältnis der Volumen zwischen der ersten und der zweiten Komponente im Bereich von 1:3 bis 3:1, insbesondere 1:2 bis 2:1, liegt. Bevorzugt beträgt dieses Verhältnis ungefähr 1:1.

Das Mischungsverhältnis wird vorzugsweise so eingestellt, dass im vermischten Polyurethanklebstoff das Verhältnis zwischen der Anzahl Isocyanatgruppen und der Anzahl gegenüber Isocyanaten reaktiven Gruppen, insbesondere die Summe aus OH- und NH₂-Gruppen, vor der Aushärtung ungefähr im Bereich von 1.2 bis 1, bevorzugt 1.1 bis 1, liegt.

Die Herstellung der beiden Komponenten erfolgt getrennt voneinander und, zumindest für die zweite Komponente,typischerweise unter Ausschluss von Feuchtigkeit. Die Komponenten werden typischerweise jeweils in einem eigenen Gebinde gelagert. Die weiteren Bestandteile des Polyurethanklebstoffs können als Bestandteil der ersten oder der zweiten Komponente vorhanden sein, wobei gegenüber Isocyanatgruppen reaktive weitere Bestandteile bevorzugt ein Bestandteil der ersten Komponente sind. Ein geeignetes Gebinde zum Lagern der jeweiligen Komponente ist insbesondere ein Fass, ein Hobbock, ein Beutel, ein Eimer, eine Büchse, eine Kartusche oder eine Tube.

Die beiden Komponenten werden vor der Anwendung getrennt voneinander gelagert und erst bei oder unmittelbar vor der Anwendung miteinander vermischt. Die Komponenten sind vorteilhaft in einer Verpackung, welche aus zwei voneinander getrennten Kammern besteht, vorhanden.

In einem weiteren Aspekt umfasst die Erfindung eine Packung bestehend aus einer Verpackung mit zwei voneinander getrennten Kammern, welche jeweils eine der beiden Komponenten des Polyurethanklebstoffs enthält.

Für Anwendungen in grösseren Mengen, insbesondere für Anwendungen in der industriellen Fertigung, werden die beiden Komponenten vorteilhaft in Fässer oder Hobbocks abgefüllt und gelagert. Bei der Anwendung werden die Komponenten über Förderpumpen ausgepresst und über Leitungen einer Mischapparatur, wie sie üblicherweise für Zweikomponentenklebstoffe in der industriellen Fertigung verwendet wird, zudosiert.

Das Mischen erfolgt typischerweise über Statikmischer oder mit Hilfe von dynamischen Mischern. Beim Mischen ist darauf zu achten, dass die zwei Komponenten möglichst homogen vermischt werden. Werden die zwei Komponenten schlecht gemischt, treten lokale Abweichungen vom vorteilhaften Mischungsverhältnis auf, was sich in einer Verschlechterung der mechanischen Eigenschaften auswirken kann. Um die Mischqualität visuell zu kontrollieren kann es vorteilhaft sein, wenn die beiden Komponenten zwei unterschiedliche Farben aufweisen. Eine gute Vermischung liegt dann vor, wenn der vermischte Klebstoff eine homogene Mischfarbe aufweist, ohne sichtbare Streifen oder Schlieren.

Beim Kontakt der ersten Komponente mit Isocyanatgruppen der zweiten Komponente beginnt die Aushärtung durch chemische Reaktion. Dabei reagieren die Aminogruppen des gegebenenfalls vorhandenen Polyamins **A3** und den Hydroxylgruppen des Triols **A1** und des Diols **A2** und gegebenenfalls vorhandenen weiteren gegenüber Isocyanatgruppen reaktive Substanzen mit vorhandenen Isocyanatgruppen. Überschüssige Isocyanatgruppen reagieren mit vorhandener Feuchtigkeit. Als Resultat dieser Reaktionen härtet der Polyurethanklebstoff zu einem festen Material aus. Dieser Vorgang wird auch als Vernetzung bezeichnet.

Ein weiterer Aspekt der vorliegenden Erfindung betrifft ein Verfahren zum Verkleben von einem ersten Substrat mit einem zweiten Substrat, welches die Schritte umfasst:
- Mischen der beiden vorgängig beschriebenen Komponenten,
- Applizieren des vermischten Polyurethanklebstoffs auf mindestens eine der zu verklebenden Substratoberflächen,
- Fügen der zu verklebenden Substrate innerhalb der Offenzeit,
- Aushärten des Polyurethanklebstoffs.

Dabei können die beiden Substrate aus dem gleichen oder unterschiedlichen Materialien bestehen.

In diesem Verfahren sind geeignete Substrate insbesondere
- Glas, Glaskeramik;
- Metalle und Legierungen, wie Aluminium, Eisen, Stahl und Buntmetalle, sowie oberflächenveredelte Metalle und Legierungen, wie verzinkte oder verchromte Metalle;
- beschichtete und lackierte Substrate, wie pulverbeschichtete Metalle oder Legierungen und lackierte Bleche;
- Kunststoffe, wie Polyvinylchlorid (Hart- und Weich-PVC), Acrylonitril-Butadien-Styrol-Copolymere (ABS), Polycarbonat (PC), Polyamid (PA), Polyester, Poly(methylmethacrylat) (PMMA), Polyester, Epoxidharze, Polyurethane (PUR), Polyoxymethylen (POM), Polyolefine (PO), Polyethylen (PE) oder Polypropylen (PP), Ethylen/Propylen-Copolymere (EPM) und Ethylen/Propylen/Dien-Terpolymere (EPDM), wobei die Kunststoffe bevorzugt mittels Plasma, Corona oder Flammen oberflächenbehandelt sein können;
- Faserverstärkte Kunststoffe, wie Kohlefaser-verstärkte Kunststoffe (CFK), Glasfaser-verstärkte Kunststoffe (GFK) und Sheet Moulding Compounds (SMC);
- Holz, mit Harzen, beispielsweise Phenol-, Melamin- oder Epoxidharzen, gebundene Holzwerkstoffe, Harz-Textil-Verbundwerkstoffe und weitere sogenannte Polymer-Composites; sowie
- Beton, Mörtel, Backstein, Ziegel, Gips und Natursteine wie Granit oder Marmor.

In diesem Verfahren ist eines oder beide Substrate bevorzugt ein Metall oder eine Keramik oder ein Glasfaser-verstärkter Kunststoff oder ein Kohlefaserverstärkter Kunststoff.

Die Substrate können bei Bedarf vor dem Applizieren des Klebstoffs vorbehandelt werden. Derartige Vorbehandlungen umfassen insbesondere physikalische und/oder chemische Reinigungsverfahren, sowie das Aufbringen eines Haftvermittlers, einer Haftvermittlerlösung oder eines Primers.

Aus diesem beschriebenen Verfahren zum Verkleben entsteht ein Artikel, bei welchem der Klebstoff zwei Substrate kraftschlüssig miteinander verbindet. Dieser Artikel ist insbesondere ein Bauwerk, beispielsweise eine Brücke, ein industrielles Gut oder ein Konsumgut, insbesondere ein Fenster, ein Rotorblatt einer Windkraftanlage oder ein Transportmittel, insbesondere ein Fahrzeug, bevorzugt ein Automobil, ein Bus, ein Lastkraftwagen, ein Zug oder ein Schiff, sowie ein Flugzeug oder ein Helikopter; oder ein Anbauteil eines solchen Artikels.

Ein weiterer Gegenstand der Erfindung ist ein Artikel erhalten aus dem vorgehend beschriebenen Verfahren zum Verkleben.

Der beschriebene Polyurethanklebstoff weist sehr gute Eigenschaften als struktureller Klebstoff auf.

Als struktureller Klebstoff wird hierbei ein Klebstoff bezeichnet, welcher im ausgehärteten Zustand einen Teil der tragenden Struktur der verklebten Bauteile bildet. Der strukturelle Klebstoff ist somit ein wichtiges Bindeglied der Konstruktion, innerhalb welcher er zwei Bauteile bzw. Substrate verbindet. An seine mechanischen Eigenschaften werden dementsprechend hohe Anforderungen gestellt.

Bevorzugt weist der ausgehärtete strukturelle Klebstoff bei Raumtemperatur eine Zugfestigkeit von mehr als 10 MPa, insbesondere mehr als 13 MPa, vorzugsweise mehr als 15 MPa, auf.

Bevorzugt weist der ausgehärtete strukturelle Klebstoff bei Raumtemperatur eine Bruchdehnung von mehr als 100 %, insbesondere mehr als 150 %, auf. Weiter kann es vorteilhaft sein wenn der ausgehärtete strukturelle Klebstoff bei Raumtemperatur ein Elastizitätsmodul im Bereich von mindestens 130 MPa, vorzugsweise mindestens 150 MPa, besonders bevorzugt mindestens 200 MPa, insbesondere mindestens 250 MPa, aufweist. Vorzugsweise ist bei Raumtemperatur der Elastizitätsmodul kleiner als 450 MPa, insbesondere kleiner als 400 MPa.

Vorzugsweise weist der ausgehärtete strukturelle Klebstoff bei Raumtemperatur eine Zugscherfestigkeit von mindestens 12 MPa,
insbesondere mindestens 15 MPa, auf, und vorzugsweise liegt der Wert unter 25 MPa, insbesondere unter 20 MPa.

Dabei sind diese genannten mechanischen Werte gemessen wie in den nachfolgenden Beispielen beschrieben.

Eine weitere wichtige Eigenschaft eines strukturellen Klebstoffs ist seine gute Verarbeitbarkeit. Dabei sollen die beiden Komponenten einzeln und beim Vermischen eine niedrige Viskosität aufweisen, sodass sie gut förderbar und mischbar sind, dann aber sehr schnell eine solche Viskosität aufbauen, dass unmittelbar ein strukturviskoses, standfestes Material erhalten wird, sodass Schichtdicken von bis zu 10 Millimetern und mehr aufgetragen werden können.

Mit dem beschriebenen Polyurethanklebstoff sind diese Anforderungen besonders gut erfüllbar.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

### 1. verwendete Substanzen:

| | |
|---|---|
| Polyisocyanat-Semiprepolymer **B1** | MDI-basiertes Semiprepolymer, Gehalt an freien NCO-Gruppen 24.4 Gewichts-%, mittlere NCO-funktionalität von 2.1 (Voramer ME 3515 von DOW) |
| Desmodur CD-S | Modifiziertes Diphenylmethandiisocyanat enthaltend 4,4'-Diphenylmethandiisocyanat und 4,4'-Diphenylmethandiisocyanat-Carbodiimide, Gehalt an freien NCO-Gruppen 30 Gewichts-%, mittlere NCO-funktionalität von 2.1 (Desmodur^{®} CD-S von Bayer) |
| Triol, **A1** | EO-endcapped Polyoxypropylentriol, OH-Zahl 34.7 mg KOH/g (Voranol^{®} CP 4755 von Dow) |
| MXDA, **A3** | 1,3-Bis-(aminomethyl)benzol |
| Zeolith | Zeolith mit Porengrösse A3 |
| DABCO | 1,4-Diazabicyclo[2.2.2]octan, 33.0 Gewichts-% in Dipropylenglykol (DABCO 33 LV^{®} von Air Products) |

Das **Polymer-1 (B2)** wurde hergestellt, indem 1300 g Polyoxypropylen-Diol (Acclaim^{®} 4200 N von Bayer; OH-Zahl 28.5 mg KOH/g), 2600 g Polyoxypropylenpolyoxyethylen-Triol (Caradol^{®} MD34-02 von Shell; OH-Zahl 35.0 mg KOH/g), 600 g 4,4'-Methylendiphenyldiisocyanat (Desmodur^{®} 44 MC L von Bayer) und 500 g Diisodecylphthalat nach bekanntem Verfahren bei 80 °C zu einem NCO-terminierten Polyurethanpolymer mit einem Gehalt an freien Isocyanat-Gruppen von 2.2-2.3 Gewichts-% umgesetzt wurden.

### 2. Herstellung von Polyurethanklebstoffen

Für jeden Klebstoff wurden die in der Tabelle 1 angegebenen Inhaltsstoffe in den angegebenen Mengen (in Gewichtsteilen) der ersten Komponente ("Komponente-1") mittels eines Vakuumdissolvers unter Feuchtigkeitsausschluss zu einer homogenen Paste verarbeitet und aufbewahrt. Ebenso wurden die in der Tabelle 1 angegebenen Inhaltsstoffe der zweiten Komponente ("Komponente-2") verarbeitet und aufbewahrt. Anschliessend wurden die beiden Komponenten mittels einem SpeedMixer® (DAC 150 FV, Hauschild) während 30 Sekunden zu einer homogenen Paste verarbeitet und diese unverzüglich folgendermassen geprüft (das Mischungsverhältnis wurde so eingestellt, dass das Verhältnis zwischen der Anzahl Isocyanatgruppen und der Anzahl gegenüber Isocyanaten reaktiven Gruppen 1.1 beträgt):
Zur Bestimmung der mechanischen Eigenschaften wurde der Klebstoff in Hantelform gemäss ISO 527, Teil 2, 1B, gebracht und entweder während 24 h bei 23°C und anschliessend während 4h bei 80°C gelagert bzw. ausgehärtet (4h 80°C) oder während 7 Tagen bei 23°C gelagert bzw. ausgehärtet (7d RT).

Danach wurden das Elastizitätsmodul im Bereich von 0.05 bis 0.25 % Dehnung ("**E-Modul")** die **Zugfestigkeit** und die **Bruchdehnung** der so hergestellten Probekörper gemäss ISO 527 auf einer Zwick Z020 Zugprüfmaschine bei der jeweils angegebenen Temperatur und einer Prüfgeschwindigkeit 50 mm/ min gemessen.

Zur Messung der **Zugscherfestigkeit** wurde der Klebstoff 1 Minute nach Abschluss der Mischzeit zwischen zwei mit Isopropanol entfetteten KTL-lackierten Stahlblechen in einer Schichtdicke von 0.5 mm und auf einer überlappenden Klebefläche 12.5 x 25 mm aufgebracht und entweder während 7 Stunden bei 23°C gelagert (7h RT = Bestimmung der Frühfestigkeit) oder während 7 Tagen bei 23°C gelagert bzw. ausgehärtet (7d RT). Danach wurde die Zugscherfestigkeit bei Raumtemperatur nach DIN EN 1465 bestimmt.
Die Resultate sind in der Tabelle 2 angegeben.

Bei den Klebstoffen ***Z-1*** bis ***Z-5*** handelt es sich um erfindungsgemässe Beispiele, bei den Klebstoffen ***Ref.1*** bis ***Ref.7*** handelt es sich um Vergleichsbeispiele.

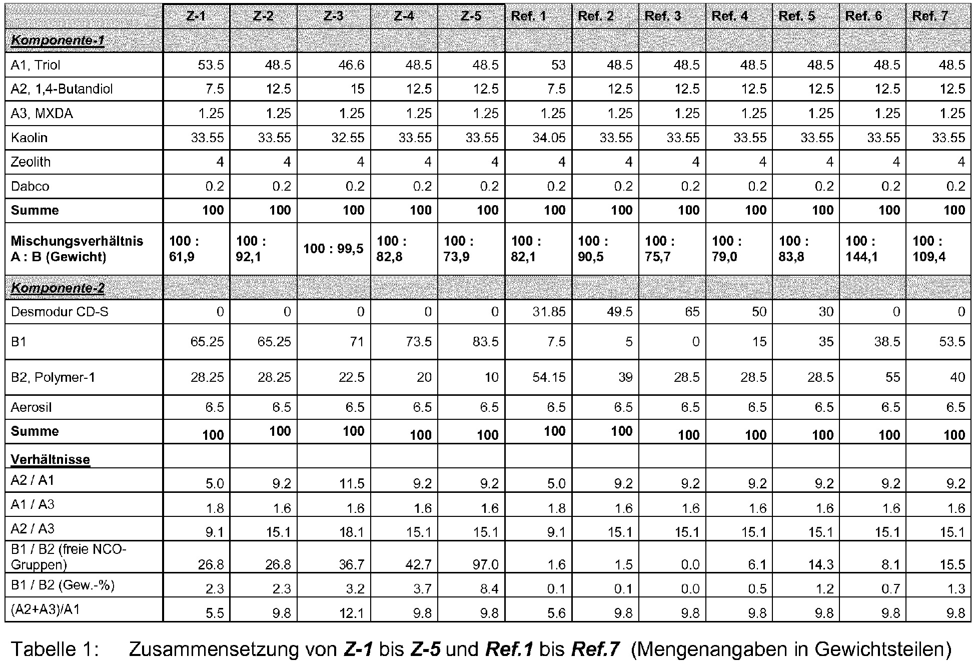

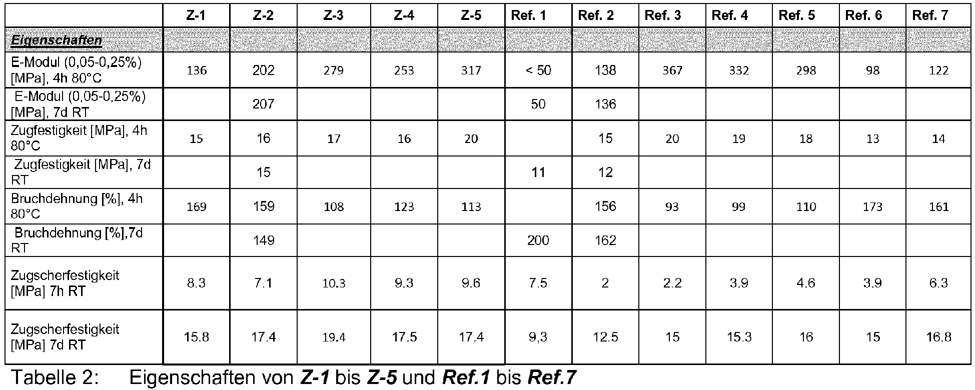

## Patentansprüche

1. Polyurethanklebstoff bestehend aus einer ersten und einer zweiten Komponente, wobei
- die erste Komponente
a) mindestens ein Triol **A1** mit einem Molekulargewicht im Bereich von 1'000 bis 10'000 g/mol,
b) mindestens ein Diol **A2** mit zwei primären Hydroxylgruppen und einem Molekulargewicht im Bereich von 60 bis 150 g/mol, und
c) vorzugsweise mindestens ein aliphatisches Polyamin **A3** mit einem Molekulargewicht im Bereich von 60 bis 200 g/mol enthält; und
- die zweite Komponente
d) mindestens ein Polyisocyanat-Semiprepolymer **B1** umfassend ein Reaktionsprodukt aus 4,4'- und gegebenenfalls 2,4'-Diphenylmethandiisocyanat mit Polyolen mit einem Molekulargewicht kleiner als 1500 g/mol, vorzugsweise Polyole ausgewählt aus der Liste bestehend aus Polyoxyalkylen-diole, Polyoxyalkylen-triole und 1,1,1-Trimethylolpropan.
und
e) mindestens ein Isocyanatgruppen aufweisendes Polyurethanpolymer **B2** enthält;
- wobei das Triol **A1** und das Diol **A2** in einer solchen Menge vorhanden sind, dass
f) das Verhältnis **V1** der Anzahl der NCO-reaktiven Gruppen von **A2/A1** im Bereich von 4 bis 15 liegt, vorzugsweise von 4.5 - 12, insbesondere bevorzugt von 5 - 11.5, am meisten bevorzugt von 8 - 10, und
- wobei das Polyisocyanat-Semiprepolymer **B1** und das Isocyanatgruppen aufweisende Polyurethanpolymer **B2** in einer solchen Menge vorhanden sind, dass
g) das Verhältnis **V2** der Anzahl freier NCO-Gruppen von **B1/B2** im Bereich von 20 bis 110 liegt, vorzugsweise von 25 - 100, insbesondere bevorzugt von 35 - 100, am meisten bevorzugt von 40 - 100.

2. Polyurethanklebstoff gemäss Anspruch 1, **dadurch gekennzeichnet, dass** das Triol **A1** ein Polyethertriol ist.

3. Polyurethanklebstoff gemäss Anspruch 1 oder 2, **dadurch gekennzeichnet, dass** das Triol **A1** primäre Hydroxylgruppen aufweist.

4. Polyurethanklebstoff gemäss einem der vorgehenden Ansprüche, **dadurch gekennzeichnet, dass** das Diol **A2** ausgewählt ist aus der Gruppe bestehend aus 1,3-Propandiol, 1,4-Butandiol und 1,5-Pentandiol.

5. Polyurethanklebstoff gemäss einem der vorgehenden Ansprüche, **dadurch gekennzeichnet, dass** das Polyamin **A3** ausgewählt ist aus der Gruppe bestehend aus 1,5-Diamino-2-methylpentan, 2,2,4- und 2,4,4-Trimethylhexamethylendiamin, 1,8-Octandiamin, 1,10-Decandiamin, 1,12-Dodecandiamin, 1-Amino-3-aminomethyl-3,5,5-trimethylcyclohexan, 2-und 4-Methyl-1,3-diaminocyclohexan und Mischungen davon, 1,3-Bis-(aminomethyl)cyclohexan, 1,4-Bis-(aminomethyl)cyclohexan, 2,5(2,6)-Bis-(aminomethyl)-bicyclo[2.2.1]heptan, 3(4),8(9)-Bis-(aminomethyl)-tricyclo[5.2.1.0^{2,6}]decan, Bis-(2-aminoethyl)ether, 3,6-Dioxaoctan-1,8-diamin, 4,7-Dioxadecan-1,10-diamin, 4,7-Dioxadecan-2,9-diamin, 4,9-Dioxadodecan-1,12-diamin, 5,8-Dioxadodecan-3,10-diamin, 1,3- Bis-(aminomethyl)benzol und 1,4-Bis-(aminomethyl)benzol.

6. Polyurethanklebstoff gemäss einem der vorgehenden Ansprüche, **dadurch gekennzeichnet, dass** das Verhältnis **V3** der Anteile in Gew.-% von **B1/B2** im Bereich von 1.5 bis 10 liegt, vorzugsweise von 2 - 9.5, insbesondere bevorzugt von 2.3 - 9, besonders bevorzugt von 3.2 - 8.5, am meisten bevorzugt von 3.7 - 8.4, bezogen auf das Gesamtgewicht der zweiten Komponente.

7. Polyurethanklebstoff gemäss einem der vorgehenden Ansprüche, **dadurch gekennzeichnet, dass** das Verhältnis **V4** der Anzahl der NCO-reaktiven Gruppen von **A2** zu der Anzahl der NCO-reaktiven Gruppen von **A3 (A2/A3)** im Bereich von 5 bis 25 liegt, vorzugsweise von 8 - 20, insbesondere bevorzugt von 10 - 20, am meisten bevorzugt von 12 - 17.

8. Polyurethanklebstoff gemäss einem der vorgehenden Ansprüche, **dadurch gekennzeichnet, dass** das Verhältnis **V5** der Anzahl der NCO-reaktiven Gruppen von **A1** zu der Anzahl der NCO-reaktiven Gruppen von **A3 (A1/A3)** im Bereich von 1 bis 2.5 liegt, vorzugsweise von 1.4 - 2, insbesondere bevorzugt von 1.5 - 1.8.

9. Polyurethanklebstoff gemäss einem der vorgehenden Ansprüche, **dadurch gekennzeichnet, dass** das Verhältnis **V6** der Summe aus der Anzahl der NCO-reaktiven Gruppen von **A2 und A3** zu der Anzahl der NCO-reaktiven Gruppen von **A1 ((A2+A3)/A1**) im Bereich von 4 bis 15 liegt, vorzugsweise von 5 - 12.5, insbesondere bevorzugt von 8 - 11, am meisten bevorzugt von 9 bis 10.5.

10. Polyurethanklebstoff gemäss einem der vorgehenden Ansprüche, **dadurch gekennzeichnet, dass** es sich bei den Polyolen mit einem Molekulargewicht kleiner als 1500 g/mol des Polyisocyanat-Semiprepolymer **B1** um Polyole ausgewählt aus der Liste bestehend aus Dipropylenglycol, Tripropylenglycol und 1,1,1-Trimethylolpropan handelt.

11. Polyurethanklebstoff gemäss einem der vorgehenden Ansprüche, **dadurch gekennzeichnet, dass** das Polyisocyanat-Semiprepolymer **B1** zusätzlich monomeres 4,4'-Diphenylmethandiisocyanat aufweist, insbesondere in einer Menge von 40-70 Gewichts-%, besonders bevorzugt von 50-60 Gewichts-%, bezogen auf das Gesamtgewicht des Polyisocyanat-Semiprepolymer **B1.**

12. Polyurethanklebstoff gemäss einem der vorgehenden Ansprüche, **dadurch gekennzeichnet, dass** der Anteil des Reaktionsprodukts aus 4,4'-und gegebenenfalls 2,4'-Diphenylmethandiisocyanat mit Polyolen mit einem Molekulargewicht kleiner als 1500 g/mol 5- 35 Gewichts-% beträgt, bezogen auf das Gesamtgewicht des Polyisocyanat-Semiprepolymer **B1.**

13. Polyurethanklebstoff einem der vorgehenden Ansprüche, **dadurch gekennzeichnet, dass** das Polyisocyanat-Semiprepolymer **B1** einen Gehalt an freien Isocyanatgruppen von 15 bis 28 Gewichts-%, besonders bevorzugt von 20 bis 27 Gewichts-%, am meisten bevorzugt von 22 bis 26 Gewichts-%, aufweist.

14. Polyurethanklebstoff gemäss einem der vorgehenden Ansprüche, **dadurch gekennzeichnet, dass** die Urethangruppen und die freien Isocyanatgruppen des Polyurethanpolymers **B2** abgeleitet sind von 4,4'-Diphenylmethandiisocyanat.

15. Polyurethanklebstoff gemäss einem der vorgehenden Ansprüche, **dadurch gekennzeichnet, dass** die Herstellung das Polyurethanpolymers **B2** nicht in Anwesenheit des Polyisocyanat-Semiprepolymers **B1** erfolgt.

16. Verfahren zum Verkleben von einem ersten Substrat mit einem zweiten Substrat, welches die Schritte umfasst:
- Mischen der beiden Komponenten eines Polyurethanklebstoffs gemäss einem der Ansprüche 1 bis 15,
- Applizieren des vermischten Polyurethanklebstoffs auf mindestens eine der zu verklebenden Substratoberflächen,
- Fügen der zu verklebenden Substrate innerhalb der Offenzeit,
- Aushärten des Polyurethanklebstoffs.

17. Artikel erhalten aus einem Verfahren zum Verkleben gemäss Anspruch 16.
